# EUROPÄISCHE PATENTSCHRIFT

(11) **EP 1 986 875 B1**
(45) Veröffentlichungstag und Bekanntmachung des Hinweises auf die Patenterteilung: **17.11.2010**
(21) Anmeldenummer: 07712006.1
(22) Anmeldetag: 05.01.2007
(51) Int. Cl.: B60H 1/00, B60K 28/06, G08B 21/06

(54) **VORRICHTUNG UND VERFAHREN ZUR KLIMASTEUERUNG**
DEVICE AND METHOD FOR CLIMATE CONTROL
DISPOSITIF ET PROCÉDÉ DE COMMANDE DE CLIMATISATION

(30) Priorität: 13.02.2006 DE 102006006436
(43) Veröffentlichungstag der Anmeldung: 05.11.2008
(73) Patentinhaber: ROBERT BOSCH GMBH, 70442 Stuttgart (DE)
(72) Erfinder: LADSTAETTER, Ulrich, 71384 Weinstadt (DE)
(86) Internationale Anmeldenummer: PCT/EP2007/050121
(87) Internationale Veröffentlichungsnummer: WO 2007/093457

(56) Entgegenhaltungen:
- DE-A1-102005 001 230
- JP-A- 60 025 817
- US-A- 4 928 090
- US-A1- 2004 201 481

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch eine Verwendung einer erfindungsgemäßen Vorrichtung in einem Kraftfahrzeug.

Aus der EP 1418082 A1 ist bereits eine Schläfrigkeitserkennung bekannt, bei der der Fahrer eines Fahrzeuges über eine Kamera beobachtet wird. Das aufgenommene Bild wird dahingehend ausgewertet, ob die Augen des Fahrers geöffnet oder geschlossen sind. Wird eine Ermüdung des Fahrers festgestellt, so wird die Klimaanlage des Fahrzeuges derart eingestellt, dass sie kalte Luft ausgibt oder dass sie der ausgegebenen Luft ein Pfefferminzaroma hinzufügt.

Aus der US 2004/0201481 A1 ist ein System zum Vermindern der Fahrermüdigkeit bekannt, das mit einer Sitzheizung für den Fahrer verbunden ist. In Abhängigkeit von einem überwachten Herzschlag des Fahrers wird die Sitzheizung aktiviert und die Ausblastemperatur der Luftdüsen erhöht, wenn eine Ermüdung des Fahrers festgestellt wird.

### Offenbarung der Erfindung

### Vorteile der Erfindung

Die erfindungsgemäße Vorrichtung zur Klimasteuerung mit den Merkmalen des Anspruchs 1 hat demgegenüber den Vorteil, dass selektiv nur der Fußraum des Fahrers gekühlt wird. Die Temperatur der übrigen Umgebung des Fahrers wird erhöht oder zumindest stabil gehalten. Bisher wurde bei einem Einsetzen von Schläfrigkeit eines Menschen von einem Absinken der Körperkerntemperatur als demjenigen Faktor ausgegangen, der die Schlafphase initiiert. Weitere Untersuchungen haben jedoch ergeben, dass die Absenkung der Körperkerntemperatur dadurch zustande kommt, dass die Blutgefäße in den Extremitäten geweitet werden. Infolge der Weitung der Blutgefäße kommt es zu einer Verstärkung der Durchblutung in den Extremitäten. Durch die verstärkte Durchblutung erfolgt ebenfalls eine verstärkte Wärmeabgabe an die Umwelt. Durch die verstärkte Wärmeabgabe sinkt die Körperkerntemperatur. Dieser Ablauf im menschlichen Organismus kann als eine physiologische Wirkkette zur Schlafeinleitung betrachtet werden. Wird nur eine Kühlung des wach zu haltenden Menschen herbeigeführt, so kann dies die Schläfrigkeit noch verstärken, indem die Absenkung der Körperkerntemperatur möglicherweise sogar beschleunigt wird. Erfindungsgemäß wird nun in der Weise in die Wirkungskette der Schlafeinleitung derart eingegriffen, dass die Beine des Fahrers, die sich im Fußraum befinden, gekühlt werden. Hierdurch kommt es zu einer Verengung der Blutgefäße in den Beinen, so dass die Abgabe von Körperwärme minimiert wird. Um einer Absenkung der Körperkerntemperatur durch die Abkühlung jedoch entgegenzuwirken, wird die übrige Umgebung des Fahrers zumindest teilweise erwärmt, um dem Körper des Fahrers an anderer Stelle Wärme zuzuführen oder eine Wärmeabgabe zumindest einzudämmen. Eine entsprechende Regelung wird von der erfindungsgemäßen Regelung zur Klimasteuerung vorgenommen. Durch die entsprechende Einstellung wird sichergestellt, dass die Wärmeabgabe des Fahrers vermindert wird und zugleich die Körperkerntemperatur gehalten wird. Durch diesen Eingriff in die Wirkkette zur Schlafeinleitung wird die Wirkkette unterbrochen oder zumindest in ihrem Ablauf gehemmt. Damit kann einem Einschlafen des Fahrers entgegengewirkt werden.

Entsprechende Vorteile ergeben sich auch für ein Verfahren zur Klimasteuerung mit den Merkmalen des nebengeordneten Anspruchs 10.

Durch die in den abhängigen Ansprüchen aufgeführten Maßnahmen sind vorteilhafte Weiterbildungen und Verbesserungen der in dem Anspruch 1 angegebenen Vorrichtung möglich. Besonders vorteilhaft ist es, Steuerungsdaten für eine Sitzheizung auszugeben, um dem Körper des Fahrers Wärme zuzuführen. Wird eine Sitzheizung angesteuert, wirkt die dort erzeugte Wärme unmittelbar auf den Fahrer, nicht aber auf andere Passagiere im Fahrzeug ein. Diese werden somit nicht durch die Wärmeregelung gestört. Zudem spricht eine Sitzheizung sehr schnell an und kann sich schnell erwärmen, so dass eine erforderliche Wärmemenge zeitnah bereitgestellt werden kann. Besonders vorteilhaft ist es dabei, die Sitzheizung derart anzusteuern, dass sie sich auf eine Temperatur über 36° C erwärmt und somit eine Temperatur über der Körpertemperatur des Fahrers annimmt. Bei einer derartigen Erwärmung kann nicht nur ein Wärmeverlust des Fahrers ausgeschlossen werden, sondern es kann dem Körper des Fahrers effektiv eine Wärmemenge zugeführt werden.

Es ist weiterhin vorteilhaft, eine Schnittstelle zur Überwachung der Temperatur im Fußraum des Fahrers vorzusehen. Hierdurch kann einerseits erreicht werden, dass eine gewünschte Temperaturabsenkung im Fußraum des Fahrers erreicht wird und andererseits die Temperatur nicht so niedrig wird, dass der Fahrer die Abkühlung als unangenehm empfindet oder gegebenenfalls eine Unterkühlung eintritt. Außerdem kann über den Temperatursensor ein Erreichen einer gewünschten Zieltemperatur für den Fußraum erfasst werden. Wird die Zieltemperatur selbst nach einiger Zeit nicht gemessen, kann hierüber ein Fehler der Klimaregelung detektiert werden.

Es ist ferner vorteilhaft, eine Schnittstelle zur Ansteuerung von Stellmotoren zum Schließen von Fahrzeugöffnungen, beispielsweise des Schiebedachs oder der Fenster des Fahrzeuges, vorzusehen. Durch die Öffnung von Fenstern oder ähnlichen Öffnungen des Fahrzeuges kann es gegebenenfalls zu einer weiteren Abkühlung des Fahrzeuginnenraums und damit des Fahrers kommen. Das Temperaturgleichgewicht, das durch die erfindungsgemäße Vorrichtung zur Klimasteuerung eingestellt werden soll, kann gestört werden. Eine dahingehende Wirkung, dass der Fahrer wach gehalten wird, kann gegebenenfalls damit ebenfalls beeinträchtigt werden. Insbesondere mit der Aktivierung der erfindungsgemäßen Klimasteuerung werden daher verschließbare Fahrzeugöffnungen, wie beispielsweise Fenster eines Fahrzeugs, über die Stellmotoren automatisch geschlossen.

Es ist ferner vorteilhaft, eine Zeitschaltung zur Beendigung einer Kühlung des Fußraumes vorzusehen. Hierdurch wird insbesondere eine starke Abkühlung der Gliedmaßen im Fußraum vermieden.

Feiner ist es vorteilhaft, einen oder mehrere Sensoren zur Überwachung von Fahrzeugöffnungen wie beispielsweise dem Fenster oder dem Schiebedach vorzusehen. Sollte der Fahrer ein Fenster öffnen, kann sowohl die hierdurch bedingte Kühlung, als auch die durch einen Luftzug bedingte Verwirbelung die wach haltende Wirkung beeinträchtigen. Wird ein Fenster oder das Schiebedach geöffnet, kann daher auch eine Kühlung des Fußraumes deaktiviert werden.

Weiterhin ist es vorteilhaft, über eine Schnittstelle den Status der erfindungsgemäßen Klimasteuerung auszugeben. Hierdurch kann ein Fahrer erkennen, ob das Fahrzeugklima bereits derart geregelt wird, dass eine wach haltende Wirkung zu erwarten ist. Besonders vorteilhaft ist die Verwendung einer erfindungsgemäßen Vorrichtung zur Klimasteuerung in einem Kraftfahrzeug, da Unfälle durch Schläfrigkeit häufig sind, andererseits nicht stets die Möglichkeit besteht, eine Fahrt bei einem Erkennen von Müdigkeit sofort abzubrechen.

### Kurze Beschreibung der Zeichnungen

Ausführungsbeispiele der Erfindung sind in den Zeichnungen dargestellt und in der nachfolgenden Beschreibung näher erläutert. Es zeigen
- Figur 1: eine Ansicht auf eine Instrumententafel in einem Kraftfahrzeug mit einer erfin- dungsgemäßen Vorrichtung zur Klimasteuerung,
- Figur 2: eine schematische Seitenansicht eines Kraftfahrzeuges mit Fahrer und einer er- findungsgemäßen Vorrichtung zur Klimasteuerung,
- Figur 3: eine erfindungsgemäße Vorrichtung zur Klimasteuerung in Verbindung mit Komponenten des Kraftfahrzeuges,
- Figur 4: einen Verfahrensablauf eines erfindungsgemäßen Verfahrens zur Klimasteue- rung.

### Ausführungsformen der Erfindung

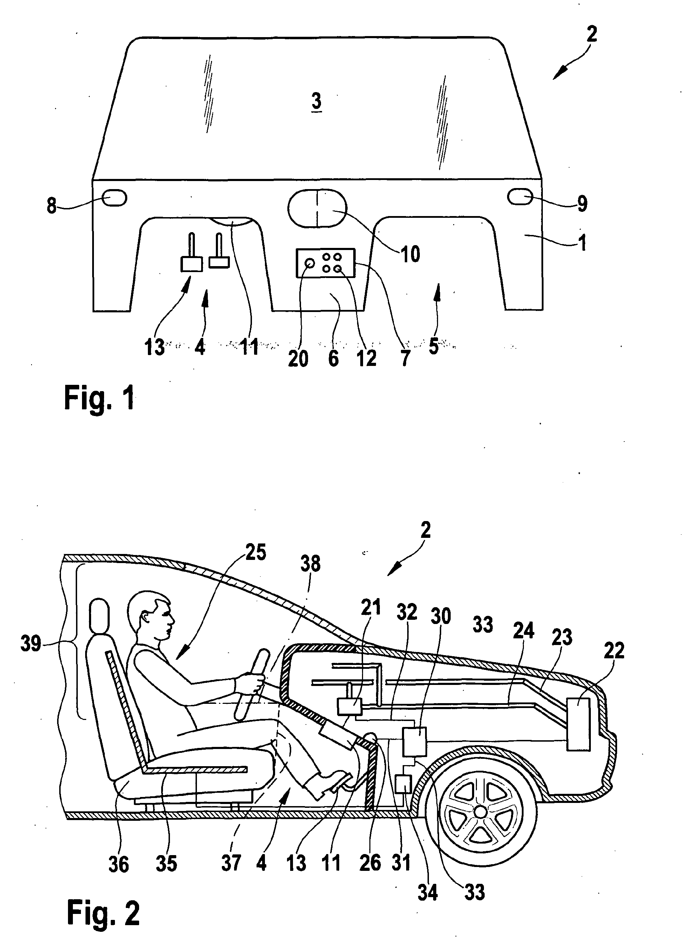

In der Figur 1 ist eine Instrumententafel 1 in einem Kraftfahrzeug 2 gezeigt, die sich an die Unterseite einer Windschutzscheibe 3 anschließt. Die Instrumententafel lässt Platz für einen Fußraum 4 eines Fahrers und für einen Fußraum 5 eines Beifahrers. Die Fußräume 4, 5 sind hierbei durch eine Mittelkonsole 6 getrennt. In dem Fußraum 4 des Fahrers befinden sich ferner Pedale 13 zur Steuerung des Fahrzeuges 2. Im Bereich der Mittelkonsole 6 der Instrumententafel 1 ist eine Bedieneinheit 7 angeordnet, die der Klimasteuerung im Fahrzeug dient. Sie ist mit einer in der Figur 1 nicht gezeigten Vorrichtung zur Klimasteuerung im Fahrzeug verbunden. Die Vorrichtung zur Klimasteuerung ist hierzu einerseits mit Sensoren im Fahrzeug, andererseits mit einer Klimaanlage, Ventilatoren und/oder Lüftungs-Stellgliedern im Fahrzeug verbunden. Um Frischluft in das Fahrzeuginnere einzuleiten, sind beispielsweise an der linken Seite ein Lufteinlass 8, an der rechten Seite ein Lufteinlass 9 und im Bereich der Mittelkonsole ein Lufteinlass 10 angeordnet. Ferner weist auch der Fußraum des Fahrers einen Lufteinlass 11 auf. Die Bedieneinheit 7 weist Bedienelemente 12 zur Steuerung der entsprechenden Fahrzeuginnenraumtemperatur auf. Wird von einem Fahrer beispielsweise eine Fahrzeuginnenraumtemperatur von 22° gewünscht, so wird die Klimaanlage des Fahrzeugs 2 derart angesteuert, dass über die Lufteinlässe 8, 9, 10, 11 Luft einer derartigen Temperatur in den Fahrzeuginnenraum strömt, dass sich nach einiger Zeit die gewünschte Temperatur einstellt. Ferner weist die Bedieneinheit 7 eine Taste 20 auf, die einer erfindungsgemäßen Einstellung der Klimaregelung dient. Drückt ein Fahrer die Taste 20, so werden von der Vorrichtung zur Klimasteuerung derartige Ansteuerungsdaten an die Stelleinheiten der Luftzufuhr ausgegeben, dass in den Fußraum 4 des Fahrers über den Lufteinlass 11 Kaltluft eingeblasen wird, deren Temperatur vorzugsweise kleiner als 18°C ist. Demgegenüber wird zumindest über die Lufteinlässe 8, 10 Luft weiterhin in einer vom Fahrer gewünschten Temperatur für den übrigen Fahrzeuginnenraum eingelassen. In einer Ausführungsform der Erfindung kann über diese Lufteinlassöffnungen auch gegenüber der von dem Fahrer gewünschten Temperatur wärmere Luft eingelassen werden. Durch die wärmere Luft kann der Wärmeverlust im gesamten Fahrzeuginnenraum durch die Zufuhr von Kaltluft in den Fußraum des Fahrers ausglichen werden.

Durch diese Klimaregelung kommt es zu einer Abkühlung des Fußraumes des Fahrers, während der übrigen Umgebung des Fahrers Wärme zugeführt wird. Die Temperatur im Fahrzeuginnenraum im Bereich des Fahrers wird dabei beispielsweise so eingestellt, dass im Fußraum eine Temperatur von 18° C vorherrscht. In der übrigen Umgebung des Fahrers wird die Lufttemperatur beispielsweise auf 21 ° C gehalten. Bei stabilen thermischen Verhältnissen im Fahrzeug erfolgt durch das höhere spezifische Gewicht der kalten Luftmasse im Fußraum nur eine geringe Vermischung der Luft. Somit wird sich eine Grenzschicht zwischen der kälteren Luft im Fußraum und der übrigen Umgebung des Fahrers einstellen.

In der Figur 2 ist die Vorrichtung zur Klimasteuerung 30 einschließlich der an sie angeschlossenen Geräte in einer seitlichen, schematischen Ansicht dargestellt. Die Vorrichtung zur Klimasteuerung 30 ist vorzugsweise in der Instrumententafel 1 vorgesehen, sie kann aber auch hinter der Spritzwand im Motorraum angeordnet sein. Die Vorrichtung zur Klimasteuerung 30 ist dabei über eine Schnittstelle, beispielsweise einen elektronischen Datenbus, zum Beispiel einen LIN-Bus, mit einer Stelleinheit 21 zur Regelung der Luftzufuhr über den Lufteinlass 11 im Fußraum 4 des Fahrers verbunden. An die Stelleinheit 21 wird von der Klimaanlage 22 des Fahrzeugs einerseits Warmluft über eine Warmluftleitung 23 und andererseits Kaltluft über eine Kaltluftleitung 24 geführt. Die Stelleinheit 21 wird von der Vorrichtung zur Klimasteuerung 30 derart angesteuert, dass sie Kaltluft in den Fußraum 4 des Fahrers hineinbläst. Die Kaltluft hat hierzu beispielsweise eine Temperatur von 15°C bis 18°C, kann aber auch noch kälter sein. Die Temperatur im Fußraum 4 des Fahrers 25 wird dabei über einen Temperatursensor 26 gemessen, wobei die Temperatur im Fußraum 4 des Fahrers von der Vorrichtung zur Klimasteuerung 30 abgefragt wird. Über die Schnittstelle 32 teilt sie der Stelleinheit 21 mit, welche Temperatur die in den Fußraum 4 abzugebende Luft haben soll. Die Stelleinheit mischt hierzu die an sie geführte Warm- und Kaltluft in der Weise, dass eine gewünschte Lufttemperatur von höchstens 18°C erreicht wird. Über die Schnittstelle 32 wird dabei gegebenenfalls die Luftzufuhrregelung vorgegeben.

In einer bevorzugten Ausführung ist die Vorrichtung zur Klimasteuerung 30 über eine weitere Schnittstelle 33 mit einer Stelleinheit 34 zur Regelung der Temperatur einer Sitzheizung 35 des Fahrers 25 verbunden. Mit dem Hineinströmen der kalten Luft in den Fußraum 4 wird über die Stelleinheit 34 die Sitzheizung 35 im Fahrersitz 36 aktiviert. Hierdurch wird zumindest eine weitere Auskühlung des Körperkerns des Fahrers verhindert. Bevorzugt wird die Sitzheizung jedoch auf eine Temperatur über 36° C eingestellt, beispielsweise 42° C, so dass dem Fahrer effektiv Wärme zugeführt wird. In einer weiteren Ausführungsform kann die Vorrichtung zur Klimasteuerung 30 auch über eine in der Figur 2 nicht gezeigte Schnittstelle mit einer weiteren Stelleinheit zur Lüftungszufuhr beispielsweise für die Lufteinlässe 8 und 10 verbunden sein. Die Stelleinheit regelt für den Fall, dass in dem Fußraum Kaltluft eingeblasen wird, die Luftzufuhr in der Weise, dass nun wärmere Luft, beispielsweise um 3° wärmer als eine von dem Fahrer gewünschte Fahrzeuginnenraumtemperatur, in den Fahrzeuginnenraum über diese Lufteinlässe eingeblasen wird. Hierzu sind die Lufteinlässe 8, 10 ebenfalls an die Luftzuführleitungen 23, 24 angeschlossen.

Durch die Sitzheizung oder durch die Zufuhr von Warmluft in die Umgebung des Fahrers wird entsprechend nicht die gesamte Umgebung des Fahrers vollständig erwärmt, aber wenigstens Teilen der Umgebung des Fahrers wird Wärme zugeführt. Durch die Mittel zur Erwärmung der übrigen Umgebung des Fahrers, die zumindest teilweise erwärmt wird, wird sichergestellt, dass die Abkühlung des Körpers des Fahrers vermindert wird oder dass dem Fahrer durch die Wärmezufuhr sogar Wärme zugeführt wird.

Der Fußraum 4 des Fahrers ist in der Figur 2 durch eine gestrichelte Linie 37 abgegrenzt. Eine scharfe Grenze des Fußraumes lässt sich hierbei nicht definieren. Eine mögliche, gedachte Linie kann diejenige sein, die die Instrumententafel mit der Vorderkante des Fahrersitzes verbindet. In einem Bereich insbesondere bis zu der Strichpunktlinie 38 kann es dabei zu Luftvermischungen kommen. Der übrige Raum, dass heißt die übrige Luft um den Fahrer herum, angedeutet durch die Klammer 39, bleibt durch die in den Fußraum 4 über den Lufteinlass 11 eingeblasene Kaltluft im Wesentlichen unbeeinflusst.

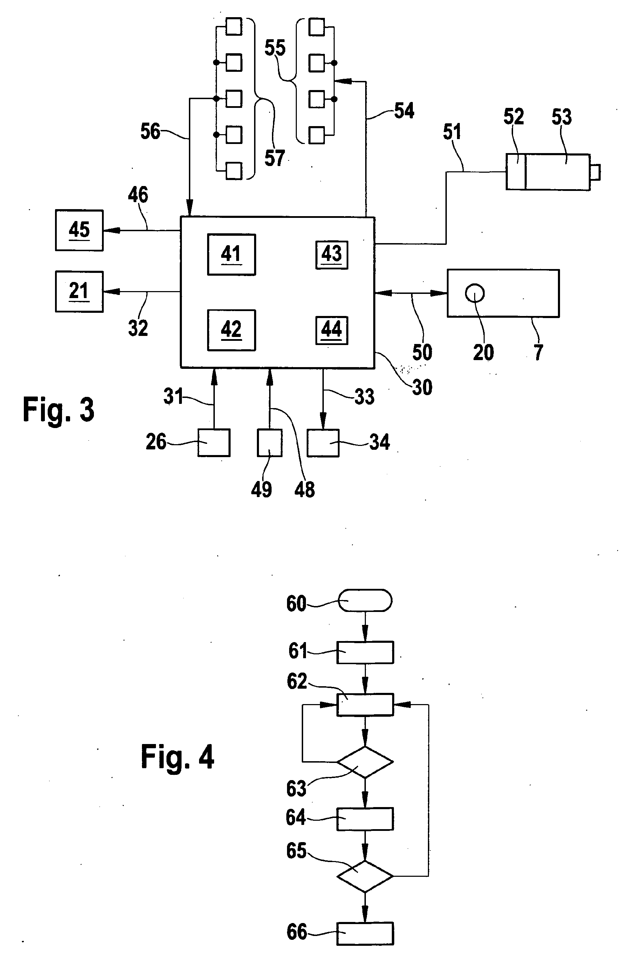

In der Figur 3 ist eine schematische Darstellung der erfindungsgemäßen Vorrichtung zur Klimasteuerung 30 im Detail dargestellt. Die Vorrichtung zur Klimasteuerung 30 weist eine Recheneinheit 41 auf, die die von den Sensoren gemeldeten Daten verarbeitet und die entsprechenden Steuerungsdaten für die Luftzufuhr in den Fußraum des Fahrers und für die Mittel zur Erwerbung der übrigen Umgebung des Fahrers ausgibt. Ferner weist die Vorrichtung zur Klimasteuerung 30 eine Speichereinheit 42 auf, in der entsprechende Programmdaten für die Durchführung des erfindungsgemäßeh Verfahrens nichtflüchtig abgelegt sind. In einer bevorzugten Ausgestaltung weist die Vorrichtung zur Klimasteuerung ferner einen weiteren Speicher 43 auf, in dem fahrzeugabhängig entsprechende Parameter für die Klimaregelung abgelegt sein können. Hierdurch ist es möglich, die erfindungsgemäße Vorrichtung zur Klimasteuerung in verschiedenen Fahrzeugtypen einzusetzen, wobei die Parameter an den jeweiligen Fahrzeugtyp anzupassen sind. Bevorzugt ist ferner eine Zeitschaltung 44 vorgesehen, mit der die Dauer einer Zuführung von Kaltluft in den Fußraum 4 des Fahrers überwacht und geregelt werden kann.

Die erfindungsgemäße Vorrichtung zur Klimasteuerung 30 ist bevorzugt als ein Steuergerät ausgeführt, das in einem zugehörigen, eigenen Gehäuse angeordnet ist. Dieses Gehäuse kann an einer dafür vorgesehenen Stelle in der Instrumententafel 1 oder im Motorraum des Fahrers angeschlossen werden. Hierbei wird über eine geeignete elektrische Schnittstelle eine Betriebsspannung zugeführt. Eine oder mehrere Stecker zum Verbinden der Vorrichtung zur Klimasteuerung mit Sensoren und Stelleinheiten im Fahrzeug sind an dem Gehäuse angeordnet. An die Vorrichtung zur Klimasteuerung angeschlossene Geräte können dabei entweder unmittelbar oder über einen Datenbus angesprochen werden bzw. Informationen an die Vorrichtung zur Klimasteuerung liefern. Als Datenbusse können zum Beispiel ein CAN-Bus oder ein LIN-Bus verwendet werden.

Über eine Schnittstelle 32 ist die Stelleinheit 21 zur Luftzuführung in den Fußraum 4 mit der Vorrichtung zur Klimasteuerung 30 verbunden. Die Stelleinheit 34 für die Sitzheizung ist über die Schnittstelle 33 mit der Vorrichtung zur Klimasteuerung 30 verbunden. Eine Stelleinheit 45 zur Luftzufuhr in den Fahrzeugraum ist über eine Schnittstelle 46 angeschlossen. Ferner ist Schnittstelle 31 für den Temperatursensor 26 und eine Schnittstelle 48 für einen Innenraumtemperatursensor 49 zur Überwachung der Umgebung des Fahrers 39 vorgesehen. Über eine bidirektionale Schnittstelle 50 ist die Bedieneinheit 7 an die Vorrichtung zur Klimasteuerung 30 angeschlossen. In einer weiteren Ausführungsform kann die Vorrichtung zur Klimasteuerung auch eine Schnittstelle 51 zu einer Schläfrigkeitsüberwachungseinheit 52 aufweisen, die beispielsweise über eine Kameravorrichtung 53 die Augenöffnung des Fahrers überwacht oder anhand einer Auswertung von Fahrdaten eine Schläfrigkeit des Fahrers erkennt. Über eine Schnittstelle 54 können Stellmotoren 55 angesteuert werden, die beispielsweise dem Schließen der Fenster dienen. Über eine Schnittstelle 56 können Sensoren im Fahrzeug ausgelesen werden, die beispielsweise das Öffnen der Fenster oder des Schiebedachs überwachen bzw. Veräriderungen durch den Fahrer in der Klimasteuerung oder Sitzheizungseinstellung detektieren.

Der Ablauf des erfindungsgemäßen Verfahrens wird im Folgenden anhand der Figur 4 erläutert. Über einen Initialisierungsschritt 60 wird die Vorrichtung zur Klimasteuerung dahingehend aktiviert, dass eine Klimasteuerung zum Wachhalten des Fahrers eingestellt wird. Diese Initialisierung kann in einer ersten Ausführungsform darüber erfolgen, dass die Vorrichtung zur Schläfrigkeitsüberwachungseinheit 52 eine Schläfrigkeit des Fahrers meldet. Entsprechend Vorrichtungen sind jedoch sehr aufwendig. Daher kann in einer bevorzugten Ausführungsform die Initialisierung über eine Betätigung der Taste 20 erfolgen. Die Taste 20 ist hierbei bevorzugt als eine Drucktaste ausgeführt. Alternativ kann eine Auswahl auch über die Auswahl in einem entsprechenden Menü in einer in einer Anzeigte dargestellten Bedienoberfläche erfolgen. Zur Auswahl wird ein entsprechendes Symbol in der Bedienoberfläche ausgewählt. Eine Rückmeldung über den Status der Klimaregelung zum Wachhalten des Fahrers erfolgt dabei bevorzugt über die Taste 20 bzw. über die symbolische Darstellung eines Bedienfeldes in einer Anzeige. Ist die entsprechende Klimaregelung nicht aktiv, so ist die Taste 20 beispielsweise dunkel bzw. das Symbol ist abgedunkelt dargestellt.

Ist der Initialisierungsschritt 60 erfolgt, so schließt sich ein Vorbereitungsschritt 61 an. In dem Vorbereitungsschritt 61 wird über die Sensoren 57 überprüft, ob Fenster und/oder Schiebedach geöffnet sind. Falls dies so ist, werden über die Stellmotoren 55 die Fenster und/oder das Schiebedach geschlossen. Sind eine oder mehrere der Fahrzeugöffnungen nicht mit einem Stellmotor zum automatischen Öffnen und Schließen ausgestattet, so wird der Fahrer über eine geeignete, in der Figur 3 nicht gezeigte Anzeige dazu aufgefordert, Fenster bzw. Schiebedach zu schließen. Die Taste 20 wird beispielsweise nun derart beleuchtet, dass eine Aktivierung der erfindungsgemäßen Vorrichtung zur Klimaregelung erkennbar ist. Beispielsweise kann als eine Bestätigung des Tastendruckes ein gelbes Licht dargestellt werden. Hierzu wird der Status der Klimaregelung über die Schnittstelle 50 an die Bedieneinheit 7 übertragen.

In einem Klimaregelungsschritt 62 werden die Stelleinheiten 21 sowie die Sitzheizung 35 und/oder die Stelleinheit 45 für die Lüftungszufuhr in den übrigen Fahrzeuginnenraum von der Vorrichtung zur Klimasteuerung 30 derart angesteuert, dass nunmehr der Fußraum gekühlt und der übrigen Umgebung des Fahrers Wärme zugeführt wird, um die Körperkerntemperatur zu halten. In einem anschließenden ersten Prüfschritt 63 wird überprüft, ob die Zieltemperatur insbesondere des Fußraumes des Fahrers bereits erreicht wurde. Ist dies nicht der Fall, so wird zu dem Klimaregelungsschritt 62 zurückverzweigt und die Klimaregelung bleibt unverändert oder eine Abkühlung des Fußraums 4 wird sogar noch verstärkt indem noch kältere Luft zugeführt wird. Wird dagegen im ersten Prüfschritt 63 festgestellt, dass die Zieltemperatur des Fußraums 4 erreicht ist, so wird zu einem Einstellungsschritt 64 weiterverzweigt, in dem die Taste 20 zu einer grünen Darstellung wechselt. Eine entsprechende Beleuchtung der Taste 20 kann beispielsweise durch eine innenliegende, mehrfarbig ansteuerbare Leuchtdiode erfolgen. Bei einer symbolischen Darstellung der Taste 20 in einer Anzeige wird entsprechend die Symboldarstellung variiert. Nach dem Einstellungsschritt 64 wird zu einem zweiten Prüfungsschritt 65 verzweigt. In dem zweiten Prüfungsschritt 65 wird überprüft, ob eine vorgegebene Dauer für eine Abkühlung des Fußraumes von beispielsweise einer Stunde ab Einstellung der gewünschten Parameter für die Lufttemperatur bereits erreicht wurde. Ist dies der Fall, so wird die Klimaregelung auf eine vorher eingestellte Temperatur zurückgeregelt und das Verfahren wird mit einem Endschritt 66 beendet. Wird dagegen festgestellt, dass die Dauer von beispielsweise einer Stunde noch nicht erreicht wurde, so wird zu dem Klimaregelungsschritt 62 zurückverzweigt.

Greift der Fahrer außerplanmäßig in die Klimaregelung ein, wird also beispielsweise über die Sensoren 57 ein Öffnen eines Fensters oder ein Öffnen eines Schiebedaches bzw. eine manuelle Deaktivierung der Sitzheizung detektiert, so wird bevorzugt eine Warnung an den Fahrer ausgegeben. Eine Warnung kann beispielsweise dadurch erfolgen, dass die Taste 20 rot blinkt.

Die Schnittstellen, die die Vorrichtung zur Klimasteuerung aufweist, können einerseits in Hardware realisiert sein, dass heißt für jede an die Vorrichtung zur Klimasteuerung angeschlossene Einheit kann ein entsprechender Hardwareanschluss vorgesehen sein. In einer anderen Ausführungsform können diese Schnittstellen jedoch auch in Software realisiert sein, so dass ein Datenfluss über eine bzw. mehrere Busverbindungen erfolgt, wobei die Schnittstellen dabei derart ausgeführt sind, dass die Daten von der Vorrichtung zur Klimasteuerung über den Datenbus an die entsprechende, von der Vorrichtung zur Klimasteuerung 30 gewünschte Einheit transportiert oder, in umgekehrter Richtung, ausgelesen werden.

## Patentansprüche

1. Vorrichtung zur Klimasteuerung (30), mit wenigstens einer Schnittstelle (32) zur Ausgabe von ersten derartigen Steuerungsdaten für eine Stelleinheit (21) einer Luftzufuhr in einen Fußraum (4) eines Fahrers, dass der Fußraum (4) gegenüber der übrigen Umgebung (39) des Fahrers gekühlt wird, und mit einer Schnittstelle (33, 46) zur Ausgabe von zweiten, derartigen Steuerungsdaten an ein Mittel (34, 35, 45) zur zumindest teilweisen Erwärmung der übrigen Umgebung (39) des Fahrers.

2. Vorrichtung nach Anspruch 1, **dadurch gekennzeichnet, dass** die zweiten Steuerungsdaten als Steuerungsdaten für eine Sitzheizung (34, 35) als ein Mittel zur Erwärmung der übrigen Umgebung (39) des Fahrers ausgebildet sind.

3. Vorrichtung nach Anspruch 2 **dadurch gekennzeichnet, dass** die zweiten Steuerungsdaten für dis Sitzheizung (34, 35) derart ausgebildet sind, dass sich die Sitzheizung auf mehr als 36°C erwärmt.

4. Vorrichtung nach einem der vorhergehenden Ansprüche, **gekennzeichnet durch** eine Schnittstelle (31) zu wenigstens einem Temperatursensor (26) zur Überwachung einer Temperatur des Fußraums (4) des Fahrers.

5. Vorrichtung nach einem der vorhergehenden Ansprüche, **gekennzeichnet durch** eine Schnittstelle (54) zur Ansteuerung wenigstens eines Stellmotors (55) zum Schließen wenigstens einer Fahrzeugöffnung.

6. Vorrichtung nach einem der vorhergehenden Ansprüche, **gekennzeichnet durch** eine Zeitschaltung (44) zur Beendigung einer Kühlung des Fußraums (4) des Fahrers nach einer vorgegebenen Zeit.

7. Vorrichtung nach einem der vorhergehenden Ansprüche, **gekennzeichnet durch** eine Schnittstelle (56) zu wenigstens einem Sensor (57) zur Überwachung einer Fahrzeugöffnung und **durch** eine Recheneinheit (41) zur Überwachung, ob die Fahrzeugöffnung geöffnet wurde.

8. Vorrichtung nach einem der vorhergehenden Ansprüche, **gekennzeichnet durch** eine Schnittstelle (50) zur Ausgabe eines Status der von der Vorrichtung zur Klimasteuerung (30) vorgenommenen Klimasteuerung.

9. Verwendung einer Vorrichtung zur Klimasteuerung (30) nach einem der vorhergehenden Ansprüche in einem Kraftfahrzeug (2).

10. Verfahren zur Klimasteuerung, bei dem von einer Steuereinheit über wenigstens eine Datenschnittstelle erste Steuerungsdaten für eine Stelleinheit einer Luftzufuhr in einen Fußraum des Fahrers zum Abkühlen des Fußraums des Fahrers gegenüber der übrigen Umgebung eines Fahrers ausgegeben werden und wobei ferner zweite Steuerungsdaten für ein Mittel zum zumindest teilweisen Erwärmen der übrigen Umgebung des Fahrers ausgegeben werden.

## Claims

1. Climate control device (30), having at least one interface (32) for outputting such first control data for an actuating unit (21) of an air supply into a foot well (4) of a driver that the foot well (4) is cooled with respect to the rest of the surroundings (39) of the driver, and having an interface (33, 46) for outputting such second control data to a means (34, 35, 45) for at least partially heating the rest of the surroundings (39) of the driver.

2. Device according to Claim 1, **characterized in that** the second control data are embodied as control data for a seat heater (34, 35) as a means for heating the rest of the surroundings (39) of the driver.

3. Device according to Claim 2, **characterized in that** the second control data for the seat heater (34, 35) are embodied such that the seat heater heats to more than 36°C.

4. Device according to one of the preceding claims, **characterized by** an interface (31) with at least one temperature sensor (26) for monitoring a temperature of the foot well (4) of the driver.

5. Device according to one of the preceding claims, **characterized by** an interface (54) for actuating at least one servomotor (55) for closing at least one vehicle opening.

6. Device according to one of the preceding claims, **characterized by** a timer circuit (44) for ending a cooling of the foot well (4) of the driver after a predefined time.

7. Device according to one of the preceding claims, **characterized by** an interface (56) with at least one sensor (57) for monitoring a vehicle opening, and by a computing unit (41) for monitoring whether the vehicle opening has been opened.

8. Device according to one of the preceding claims, **characterized by** an interface (50) for outputting a status of the climate control process performed by the climate control device.

9. Use of a climate control device (30) according to one of the preceding claims in a motor vehicle (2).

10. Climate control method in which first control data for an actuating unit of an air supply into a foot well of the driver for cooling the foot well of the driver with respect to the rest of the surroundings of a driver are output by a control unit via at least one data interface, and wherein, in addition, second control data are output for a means for at least partially heating the rest of the surroundings of the driver.

## Revendications

1. Dispositif de commande de climatisation (30), comprenant au moins une interface (32) pour émettre des premières données de commande pour une unité de commande (21) d'une alimentation en air dans un espace pour les pieds (4) d'un conducteur, de telle sorte que l'espace pour les pieds (4) soit refroidi par rapport au reste de l'environnement (39) du conducteur, et comprenant une interface (33, 46) pour émettre des deuxièmes données de commande de ce type à un moyen (34, 35, 45) pour réchauffer au moins en partie le reste de l'environnement (39) du conducteur.

2. Dispositif selon la revendication 1, **caractérisé en ce que** les deuxièmes données de commande sont réalisées pour un chauffage de siège (34, 35) sous forme de moyen pour réchauffer le reste de l'environnement (39) du conducteur.

3. Dispositif selon la revendication 2, **caractérisé en ce que** les deuxièmes données de commande pour le chauffage du siège (34, 35) sont réalisées de telle sorte que le chauffage du siège produise un chauffage supérieur à 36°C.

4. Dispositif selon la revendication 2, **caractérisé par** une interface (31) avec au moins un capteur de température (26) pour la surveillance d'une température de l'espace pour les pieds (4) du conducteur.

5. Dispositif selon l'une quelconque des revendications précédentes, **caractérisé par** une interface (54) pour la commande d'au moins un moteur de réglage (55) pour fermer au moins une ouverture du véhicule.

6. Dispositif selon l'une quelconque des revendications précédentes, **caractérisé par** un circuit temporel (44) pour la coupure d'un refroidissement de l'espace pour les pieds (4) du conducteur après un temps prédéterminé.

7. Dispositif selon l'une quelconque des revendications précédentes, **caractérisé par** une interface (56) avec au moins un capteur (57) pour la surveillance d'une ouverture du véhicule et par un ordinateur (41) pour surveiller si l'ouverture du véhicule a été ouverte.

8. Dispositif selon l'une quelconque des revendications précédentes, **caractérisé par** une interface (50) pour émettre un état de la commande de climatisation effectuée par le dispositif de commande de climatisation (30).

9. Utilisation d'un dispositif de commande de climatisation (30) selon l'une quelconque des revendications précédentes, dans un véhicule automobile (2).

10. Procédé de commande de climatisation, dans lequel une unité de commande par le biais d'au moins une interface de données émet des premières données de commande pour une unité de commande d'une alimentation en air dans un espace pour les pieds du conducteur pour refroidir l'espace pour les pieds du conducteur vis-à-vis du reste de l'environnement d'un conducteur, et dans lequel en outre des deuxièmes données de commande pour un moyen pour au moins partiellement réchauffer le reste de l'environnement du conducteur sont émises.
